# EUROPEAN PATENT APPLICATION

(11) **EP 4 752 167 A1**
(43) Date of publication of application: **03.06.2026**
(21) Application number: 24844446.5
(22) Date of filing: 14.06.2024
(51) Int. Cl.: C08G 69/32, H01M 50/446, H01M 50/403, H01M 10/0525, H01M 10/052, C08G 69/28

(54) **LITHIUM BATTERY SEPARATOR BASED ON REACTION CONTROL AGENT AND PREPARATION METHOD THEREFOR**

(30) Priority: 24.07.2023 CN 202310910982
(71) Applicant: Hebei Gellec New Energy Science & Technology Co., Ltd, Handan, Hebei 057150 (CN)
(72) Inventor: YUAN, Haichao, Handan, Hebei 057150 (CN); XU, Feng, Handan, Hebei 057150 (CN); XI, Teng, Handan, Hebei 057150 (CN); YANG, Rongqian, Handan, Hebei 057150 (CN); SU, Bihai, Handan, Hebei 057150 (CN)
(74) Representative: Maiwald GmbH
(86) International application number: PCT/CN2024/099253
(87) International publication number: WO 2025/020751

(57) **Abstract**

Provided are a lithium battery separator based on a reaction control agent, and a preparation method for a lithium battery separator. The lithium battery separator is prepared based on a high-molecular weight poly-p-phenylene terephthalamide polymer solution with low apparent viscosity. A preparation method for the high-molecular weight poly-p-phenylene terephthalamide polymer solution with low apparent viscosity includes the following steps: adding a reaction control agent in the process of synthesizing poly-p-phenylene terephthalamide from p-phenylenediamine and terephthaloyl chloride to obtain a high-molecular weight poly-p-phenylene terephthalamide polymer solution with low apparent viscosity containing the reaction control agent, where a concentration of the reaction control agent in the high-molecular weight poly-p-phenylene terephthalamide polymer solution with low apparent viscosity is less than 300 ppm, and the reaction control agent is a solvent which is miscible with the first solvent and capable of curing the poly-p-phenylene terephthalamide at the same time.

## Description

### TECHNICAL FIELD

The present disclosure belongs to the technical field of battery separators, and in particular to a lithium battery separator based on a reaction control agent, and a preparation method for the lithium battery separator.

### BACKGROUND

With the development of social economy, the demand of people for lithium-ion batteries is increasing, and the safety problem in the use process has undoubtedly become an urgent problem.

Lithium-ion batteries are prone to combustion and explosion during use. For example, under abnormal conditions such as collision, the lithium-ion battery separator is damaged, the cathode and anode are in direct contact, resulting in short circuit of the battery, which will lead to thermal runaway, even more serious consequences such as spontaneous combustion or explosion. Therefore, the separator needs to have good thermal stability and mechanical properties, and requires a high ion penetration rate to ensure the electrochemical performance of the lithium-ion battery.

Poly-p-phenylene terephthalamide has high heat resistance (the glass transition temperature is above 300°C, the thermal decomposition temperature is as high as 560°C, and the strength retention rate is 84% after being placed in the air at 180°C for 48 hours), high tensile strength and initial elastic modulus (the fiber strength is 0.215 N/denier, the modulus is 4.9-9.8 N/denier, and the specific strength is five times that of steel), and stable thermal shrinkage and creep properties. In addition, the poly-p-phenylene terephthalamide has high insulation and chemical corrosion resistance, and is an excellent separator material. Therefore, the preparation of the battery separator by using a separator slurry containing poly-p-phenylene terephthalamide has become an important research direction.

In CN115295961A, it is proposed to dissolve a finished poly-p-phenylene terephthalamide product with a solvent and solubilizing substances (strong alkali) to make slurry and to coat the slurry on the base film to form a composite film. The slurry of the poly-p-phenylene terephthalamide separator in the composite film is solidified into pores by steam-induced phase separation. In this method, the strong alkali is used as the solvent, leading to high risk factor and high cost of finished poly-p-phenylene terephthalamide product, moreover, the use of the stream-induced phase separation is troublesome.

In CN114388985A, it is proposed to directly prepare wet-process aramid porous film with a poly-p-phenylene terephthalamide polymer solution, and to coat the aqueous solution of the poly-p-phenylene terephthalamide nanofiber on both sides of the film to prepare a poly-p-phenylene terephthalamide separator. The separator can better reflect the performance advantages of the poly-p-phenylene terephthalamide. However, the content of poly-p-phenylene terephthalamide used in this method is large, leading to high cost, and complicated process.

In CN111019124A, it is proposed to add polyethylene glycol and fumed nano-ceramic particles in the process of synthesizing poly-p-phenylene terephthalamide, and to add dimethyl carbonate as a pore-forming agent after polymerization. This method can effectively prolong the shelf life of the slurry, but the slurry prepared by this method has large apparent viscosity, which is not conducive to coating, and large coating thickness leads to thick separator, which is not conducive to the shuttle of ions. On the other hand, and the introduction of the pore-forming agent also increases the difficulty of recovering extractant in the later stage.

In CN109411676A, it is proposed to add a non-solvent into a poly-p-phenylene terephthalamide solution as a pore-forming agent of a coating slurry, which can effectively improve the thermal stability and thermal shrinkage resistance of the separator. However, in practical production of the method, due to high apparent viscosity of the slurry, it is difficult to feed materials smoothly and realize batch production. Moreover, the addition of pore-forming agent is equivalent to the introduction of a new substance, which is not conducive to the separation and recovery of the extractant (solvent) and increases the production cost.

### SUMMARY

For the disadvantages in the prior art, an objective of the present disclosure is to provide a preparation method for a high-molecular weight poly-p-phenylene terephthalamide polymer solution with low apparent viscosity.

Another objective of the present disclosure is to provide a slurry for a lithium battery coating separator.

Another objective of the present disclosure is to provide a method for preparing a slurry for a lithium battery coating separator.

Another objective of the present disclosure is to provide a preparation method for a lithium battery separator.

The objectives of the present disclosure are achieved through the following technical solution:

A preparation method for a high-molecular weight poly-p-phenylene terephthalamide polymer solution with low apparent viscosity includes the following steps: adding a reaction control agent in the process of synthesizing poly-p-phenylene terephthalamide (PPTA) from p-phenylenediamine and terephthaloyl chloride to obtain a high-molecular weight poly-p-phenylene terephthalamide polymer solution with low apparent viscosity containing the reaction control agent, in which a concentration of the reaction control agent in the high-molecular weight poly-p-phenylene terephthalamide polymer solution with low apparent viscosity is less than 300 ppm (the concentration of the reaction control agent in the high-molecular weight poly-p-phenylene terephthalamide polymer solution with low apparent viscosity is preferably less than or equal to 200 ppm, more preferably less than or equal to 150 ppm), concentration of water in a first solvent used for synthesizing the poly-p-phenylene terephthalamide is less than or equal to 100 ppm, and the reaction control agent is a solvent which is miscible with the first solvent and capable of curing the poly-p-phenylene terephthalamide (PPTA) at the same time.

In the above technical solution, the reaction control agent is deionized water, alcohol, ester, or ether.

Specifically, the preparation method for a high-molecular weight poly-p-phenylene terephthalamide polymer solution with low apparent viscosity includes the following steps:

Step 1. Solubilizing salt and a first solvent are mixed in an atmosphere of nitrogen or inert gas, and stirred until the solubilizing salt is uniformly dispersed in the first solvent to obtain a first mixed solution, where in parts by mass, a ratio of the first solvent to the solubilizing salt is (100-103): (3-8).

In Step 1, the solubilizing salt is calcium chloride, and/or lithium chloride.

In Step 1, first solvent is a nonaqueous solvent, or an aqueous solvent. The nonaqueous solvent is one, or a mixture of multiple of N-methylpyrrolidone, hexamethylphosphoramide, dimethylacetamide, and tetramethylurea, and the aqueous solvent is a mixture of the aqueous solvent and water.

In Step 1, the stirring is carried out at a rotating speed of 300-1500 rpm for 60-120 min at a temperature of 50-90°C.

Step 2. The first mixed solution is cooled to 5-15°C in the atmosphere of nitrogen or inert gas, p-phenylenediamine is added into the first mixed solution, and stirred uniformly to obtain a second mixed solution, wherein a ratio of the parts by mass of the first mixed solution to the parts by amount of substance of the p-phenylenediamine is 100: (16-20), and the unit of the parts by amount of substance is mol, and the unit of the parts by mass is kg.

In Step 2, the stirring is carried out at a rotating speed of 300-1500 rpm for 20-50 min.

In Step 3. The second mixed solution is cooled to minus 5-5°C in the atmosphere of nitrogen or inert gas, terephthaloyl chloride is added into the second mixed solution, and stirred uniformly to obtain a high-molecular weight poly-p-phenylene terephthalamide polymer solution with low apparent viscosity, where in parts by mass, a ratio of the p-phenylenediamine to the terephthaloyl chloride is (1-1.05): 1.

In Step 1 to Step 3, the reaction control agent is added at one time or multiple times in any of the Step 1 to Step 3, making a concentration of the reaction control agent in the high-molecular weight para-aramid polymer solution with low apparent viscosity less than or equal to 300 ppm.

In Step 3, the stirring is carried out at a rotating speed of 300-1500 rpm for 10-30 min.

A slurry for a lithium-ion coating separator includes a second solvent, solid ceramic particles, and the high-molecular weight para-aramid polymer solution with low apparent viscosity. In parts by mass, a ratio of the solid ceramic particles to the high-molecular weight para-aramid polymer solution with low apparent viscosity is (5-30): (50-80). The solid ceramic particles are one, or a mixture of multiple of alumina, fumed alumina, silica, zirconia, aluminum hydroxide, magnesium hydroxide, barium sulfate, boehmite, boron nitride, silicon nitride, and silicon carbide.

In the above technical solution, the slurry for a lithium-ion coating separator further includes a dispersant. In parts by mass, a ratio of the dispersant to the solid ceramic particles is (0.01-5): (5-30). The dispersant is one, or a mixture of multiple of a polymer block copolymer dispersant, sodium polyacrylate, potassium polyacrylate, ammonium polyacrylate, and sodium polycarboxylate.

In the above technical solution, the second solvent is a nonaqueous solvent, or an aqueous solvent. Preferably, the second solvent is the same as the first solvent.

In the above technical solution, in parts by mass, a ratio of the second solvent to the solid ceramic particles is (60-90): (5-30).

In the above technical solution, a particle size of the solid ceramic particle is 0.05-10 µm, and the particle size of the fumed alumina is 50-600 nm.

A preparation method for the slurry for a lithium battery coating separator includes the following steps: uniformly mixing the second solvent, the solid ceramic particles and the high-molecular weight poly-p-phenylene terephthalamide polymer solution with low apparent viscosity to obtain the slurry for a lithium battery coating separator.

When the slurry for a lithium battery coating separator further includes a dispersant, the preparation method for the slurry for a lithium battery coating separator includes the following steps: uniformly mixing the dispersant, the second solvent, the solid ceramic particles and high-molecular weight poly-p-phenylene terephthalamide polymer solution with low apparent viscosity to obtain the slurry for a lithium battery coating separator.

Specifically, the preparation method for the slurry for a lithium battery coating separator includes the following steps:
S1. A solution A is prepared, where the solution A includes the second solvent;
In S1, the solution A further includes the dispersant, a method for preparing the second solvent is as follows: mixing the dispersant with the second solvent, stirring until the dispersant is uniformly dispersed into the second solvent to obtain the solution A.

In S1, the stirring is carried out at a rotating speed of 300-800 rpm for 15-45 min.

S2. The solid ceramic particles are added into the solution A obtained in S1, stirred and sand-milled to obtain a solution B.

In S2, the stirring is carried out at a rotating speed of 300-800 rpm for 15-50 min.

In S2, the sand-milling is carried out at a rotating speed of 1000-2000 rpm for 30-60 min.

S3. The solution B in S2 is mixed with the high-molecular weight poly-p-phenylene terephthalamide polymer solution with low apparent viscosity and stirred to obtain the slurry for a lithium battery coating separator.

In S3, the stirring is carried out at a rotating speed of 500-2000 rpm for 20-60 min.

A lithium battery separator includes a base film, and a coating covered on one or double sides of the base film, where the coating is prepared from the slurry for a lithium-ion coating separator.

In the above technical solution, the base film is a polyethylene separator, a PP/PE/PP (polypropylene/polyethylene/polypropylene) three-layer separator, non-woven fabric, or a polyimide separator.

A preparation method for the lithium battery separator includes the following steps: coating the slurry for a lithium battery coating separator on one side or two sides of the base film, performing gradient content extraction of the solvent, and drying to obtain a lithium battery separator.

In the above technical solution, a coating mode is gravure coating, dip coating, or slot coating. The thickness of the coated single-sided coating is 1-10 µm.

In the above technical solution, the base film has a thickness of 5-25 µm.

In the above technical solution, the gradient content extraction of the solvent includes adopting extractants containing extractive solution and water for extraction in turn. When the extractants containing the extractive solution are used for extraction, the concentrations of the extractive solutions in the extractants used in turn decrease.

In the above technical solution, the gradient content extraction of the solvent includes sequentially extracting with a first extractant, a second extractant, a third extractant and a fourth extractant. Each of the first extractant, the second extractant and the third extractant is a mixture of the extractive solution and water, the concentration of the extractive solution in the first extractant is 80-95wt%, the concentration of the extractive solution in the second extractant is 40-55wt%, the concentration of the extractive solution in the third extractant is 20-35wt%, and the fourth extractant is water.

In the above technical solution, the drying is carried out at a temperature of 60-80°C for 30-120 s.

In the above technical solution, when the first solvent is the nonaqueous solvent, the extraction solution is the same as the first solvent. When the first solvent is the aqueous solvent, the extraction solution is the same as the nonaqueous solvent.

The present disclosure provides application of the lithium battery separator in a lithium battery.

In the above technical solution, a cathode active material of the lithium battery is a ternary composite of lithium cobaltate, lithium manganate, and lithium nickelate. An anode material is one of graphite, and SiC. Electrolyte of an electrolyte solution in the lithium battery is one, or a mixture of multiple of LiPF₆, LiBF₄, LiAsF₆, and LiSbF₆.

Compared with the prior art, the present disclosure has the following beneficial effects:
1. According to the present disclosure, the high-molecular weight poly-p-phenylene terephthalamide polymer solution with low apparent viscosity contains a reaction control agent with a concentration less than or equal to 300 ppm. The corresponding amount of reaction control agent and first solvent can be added in the synthesis process of poly-p-phenylene terephthalamide by calculation, and the reaction control agent can be added at one time or multiple times. Due to the step of adding the reaction control agent in the preparation method for the high-molecular weight poly-p-phenylene terephthalamide polymer solution with low apparent viscosity, the speed of polymerization can be controlled, a chain length of the polymerized single chain is more uniform, the distribution of the polymerized chains is more orderly, such that the high-molecular weight poly-p-phenylene terephthalamide polymer solution with low apparent viscosity has reduced apparent viscosity, coarsened fiber, increased porosity, better wettability, and enhanced thermal stability.
2. Due to the coarsened fiber and increased porosity, there is no need to add additional pore-forming agent in the slurry, which is conducive to reducing cost and increasing efficiency.
3. Because no pore-forming agent is needed, the solid-liquid separation can be achieved by distillation after the extractive solution is neutralized with alkali, and meanwhile, the water and the first solvent/second solvent can also be separated due to the large difference in boiling points, which is conducive to the separation and recycling of the extractive solution.

### BRIEF DESCRIPTION OF THE DRAWINGS

FIG. 1 shows electrolytic wettability data of lithium battery separators prepared in Embodiments 1-2 and lithium battery separators prepared in Comparative examples 1-2;
FIG. 2 is a scanning electron micrograph of a lithium battery separator prepared in Embodiment 1;
FIG. 3 is a scanning electron micrograph of a lithium battery separator prepared in Comparative example 1;
FIG. 4 is a scanning electron micrograph of a poly-p-phenylene terephthalamide separator in CN109411676A;
FIG. 5 is a scanning electron micrograph of a lithium battery separator prepared in Embodiment 2;
FIG. 6 is a scanning electron micrograph of a lithium battery separator prepared in Comparative example 2;
FIG. 7 is an electron micrograph of the section of a lithium battery separator prepared in Embodiment 1.

### DETAILED DESCRIPTION OF THE EMBODIMENTS

According to the present disclosure, a high-molecular weight poly-p-phenylene terephthalamide polymer solution with low apparent viscosity is obtained by adding a reaction control agent, and the reaction control agent can control a reaction rate of polymerization. On the premise of unchanging or slightly reducing the weight-average molecular weight, the apparent viscosity can be reduced to the greatest extent, which is convenient for the preparation of the slurry and can better adapt to the batch production of enterprises.

A slurry for a lithium battery coating separator is prepared by mixing the high-molecular weight poly-p-phenylene terephthalamide polymer solution with low apparent viscosity with the solid ceramic particles, which not only can ensure the smooth coating, but also can show the performance advantages of the poly-p-phenylene terephthalamide to the greatest extent. On the other hand, a pore-forming agent is not used in the preparation of the slurry for a lithium battery coated separator, so the extractant after extraction only contains water and extractive solution besides the acid generated by synthetic reaction, which is conducive to the separation and recycling of the extractive solution.

The technical solution of the present disclosure is further described below with reference to specific embodiments.

Basic information of raw materials and equipment involved in the following embodiments is as follows:

| **Chemicals** | **Manufacturer** | **Purity** |
|---|---|---|
| N-methylpyrrolidone | Puyang Guangming Chemical Co., Ltd. | 99.99% |
| Calcium chloride | Zhejiang Juhua Co., Ltd. | >95% |
| P-phenylenediamine | Shanghai Macklin Biochemical Technology Co., Ltd. | 99.0% |
| Paraphthaloyl chloride | Shanghai Macklin Biochemical Technology Co., Ltd. | 99% |
| Fumed alumina | Sinopharm Chemical Reagent Co., Ltd. | 99.9% |
| Alumina | Evonik Industries | 99.99% |
| Barium sulfate | Shanghai Macklin Biochemical Technology Co., Ltd. | 98.5, 6000 meshes |
| BYK-LPN21954 (polymer block copolymer dispersant) | GYH (Shanghai) Chemical Co., Ltd | 98% |
| Deionized water | - | Ultrapure water machine preparation |
| Sulfuric acid (analytically pure) (used for testing the weight-average molecular weight) | Sinopharm Chemical Reagent Co., Ltd. | 98% |

| Instrument | Model | Manufacturer |
|---|---|---|
| Stirrer | Double-planetary power mixer | Guangzhou Hongyun Hybrid Equipment Co., Ltd. |
| Sand mill | Rod-pin nano sand mill | Guangzhou Puhler Machineary&Equipment Co., Ltd. |
| Coating Machine | Micro-gravure coating machine | Hefei Dongsheng Machineary&Equipment Co., Ltd. |
| Digital display rotational viscometer (Apparent viscosity) | NDJ-8S | Shandong Meik instrument Co., Ltd. |
| Constant temperature water bath oscillator | SHA-BA | Changzhou Guowang Instrument Manufacturing Co., Ltd. |
| Kinematic viscosity determinator (for determining Intrinsic logarithmic viscosity and weight average molecular weight) | SYD-265C | Shanghai Jingxi Instrument Manufacturing Co., Ltd |

The wettability of electrolyte solution is carried out in an electrolyte solution with LiPF₆ as the electrolyte (purchased from Zhuhai Guangrui). The concentration of LiPF₆ in the electrolyte is 1 mol/L.

### Embodiment 1

A preparation method for a high-molecular weight poly-p-phenylene terephthalamide polymer solution with low apparent viscosity includes the following steps:
Step 1. Solubilizing salt and a first solvent are mixed in an atmosphere of nitrogen, and stirred at a temperature of 80°C a rotating speed of 600 rpm for 80 min until the solubilizing salt is uniformly dispersed in the first solvent to obtain a first mixed solution. In the stirring process, deionized water which serves as the reaction control agent is added to make a concentration of the reaction control agent in the high-molecular weight poly-p-phenylene terephthalamide polymer solution with low apparent viscosity be 100 rpm. In parts by mass, a ratio of the first solvent to the solubilizing salt is 100: 6, the first solvent is a N-methylpyrrolidone solution, the water content in the first solvent is 62.3 ppm, and the solubilizing salt is calcium chloride.
Step 2. The first mixed solution is cooled to 11°C in the atmosphere of nitrogen, p-phenylenediamine is added into the first mixed solution, and stirred at a rotating speed of 600 rpm for 25 min until uniform, thus obtaining a second mixed solution. A ratio of the parts by mass of the first mixed solution to the parts by amount of substance of the p-phenylenediamine is 100: 16.5, the unit of the parts by mass is kg, and the unit of the parts by amount of substance is mol.
Step 3. The second mixed solution is cooled to 1.2°C in the atmosphere of nitrogen, terephthaloyl chloride into is added into the second mixed solution, and stirred at a rotating speed of 600 rpm for 20 min until uniform, thus obtaining a high-molecular weight poly-p-phenylene terephthalamide polymer solution with low apparent viscosity. In parts by amount of substance, a ratio of the p-phenylenediamine to the terephthaloyl chloride is 16.5: 16.

A slurry for a lithium-ion coating separator includes a second solvent, a dispersant, solid ceramic particles, and the high-molecular weight poly-p-phenylene terephthalamide polymer solution with low apparent viscosity. In parts by mass, a ratio of the dispersant to the solid ceramic particles to the high-molecular weight poly-p-phenylene terephthalamide polymer solution with low apparent viscosity is 0.5: 15: 60. A ratio of the second solvent to the solid ceramic particles is 83.5: 15. In this embodiment, the dispersant is BYK-LPN21954, the solid ceramic particles are alumina (solid particles) and fumed alumina (powder) in a mass ratio of 5: 10. The particle size of the alumina is 0.05-1 µm, and the particle size of the fumed alumina is 50-150 nm. The second solvent is the same as the first solvent.

A preparation method for the slurry for a lithium battery coating separator includes the following steps:
S1. The dispersant and the second solvent are mixed and stirred at a rotating speed of 500 rpm for 25 min until the dispersant is uniformly dispersed into the second solvent, thus obtaining a solution A.
S2. The alumina is added into the solution A, and then stirred at a rotating speed of 500 rpm for 25 min, and then the fumed alumina is added and then stirred at a rotating speed of 600 rpm for 25 min, all the solid ceramic particles are added and sand-milled at 1700 rpm for 50 min, thus obtaining a solution B.
S3. The solution B and the high-molecular weight poly-p-phenylene terephthalamide polymer solution with low apparent viscosity are mixed and then stirred at a rotating speed of 600 rpm for 30 min to obtain a slurry for a lithium battery coating separator.

A method for preparing a lithium battery separator includes the following steps:
coating the slurry for a lithium battery coating separator on one side of a base film at a speed of 8 m/min by micro-gravure coating, carrying out gradient content extraction of the solvent, drying at 80°C for 60 s to obtain the lithium battery separator, in which the thickness of the coated coating is 3 µm, and the base film is a PE film with a thickness of 12 µm. The gradient content extraction of the solvent includes performing extraction by using a first extractant, a second extractant, a third extractant and a fourth extractant in turn (the immersion time of the separator in one extractant is 9 s). Each of the first extractant, the second extractant and the third extractant is a mixture of an extractive solution and water, and the extractive solution is N-methylpyrrolidone. The concentration of the extractive solution in the first extractant is 90 wt%, the concentration of the extractive solution in the second extractant is 50 wt%, and the concentration of the extractive solution in the third extractant is 30 wt%. The fourth extractant is water.

### Comparative example 1

A preparation method for a poly-p-phenylene terephthalamide polymer solution is essentially consistent with that in Embodiment 1, and the only difference is that in this comparative example, the deionized water as a reaction control agent is not added during stirring, and the water content in the first solvent is 55.4 ppm.

A slurry for a lithium battery coating separator is basically the same as the slurry for a lithium battery coating separator in Embodiment 1. The only difference is that the high-molecular weight poly-p-phenylene terephthalamide polymer solution with low apparent viscosity in the slurry for the lithium battery coating separator in Embodiment 1 is replaced with "poly-p-phenylene terephthalamide polymer solution" in this Comparative example.

A preparation method for the slurry for a lithium battery coating separator in this Comparative example is basically the same as that for the slurry for a lithium battery coating separator in Embodiment 1. The only difference is that the high-molecular weight poly-p-phenylene terephthalamide polymer solution with low apparent viscosity in the preparation method for the slurry for the lithium battery coating separator in Embodiment 1 is replaced with "poly-p-phenylene terephthalamide polymer solution" in this Comparative example.

A method for preparing a lithium battery separator is basically consistent with "a method for preparing a lithium battery separator" in Embodiment 1. The difference is that the slurry for a lithium battery coating separator prepared from the poly-p-phenylene terephthalamide polymer solution prepared in Comparative example 1 has high apparent viscosity, which leads to slow feeding speed in the process of on-machine coating, inability to match coating speed, serious missing coating, and a situation that the thickness of single-sided coating of the lithium battery separator after coating is 2 µm.

### Embodiment 2

A preparation method for a high-molecular weight poly-p-phenylene terephthalamide polymer solution with low apparent viscosity includes the following steps:
Step 1. Solubilizing salt and a first solvent are mixed in an atmosphere of nitrogen, and stirred at a temperature of 80°C a rotating speed of 600 rpm for 80 min until the solubilizing salt is uniformly dispersed in the first solvent to obtain a first mixed solution. In parts by mass, a ratio of the first solvent to the solubilizing salt is 100: 6.5, the first solvent is a N-methylpyrrolidone solution, the water content in the first solvent is 61.2 ppm, and the solubilizing salt is calcium chloride.
Step 2. The first mixed solution is cooled to 9.2°C in the atmosphere of nitrogen, p-phenylenediamine is added into the first mixed solution, and stirred at a rotating speed of 600 rpm for 35 min until uniform, thus obtaining a second mixed solution. In the stirring process, deionized water which serves as the reaction control agent is added to make a concentration of the reaction control agent in the high-molecular weight poly-p-phenylene terephthalamide polymer solution with low apparent viscosity be 200 rpm. A ratio of the parts by mass of the first mixed solution to the parts by amount of substance of the p-phenylenediamine is 100: 17.5, the unit of the parts by mass is kg, and the unit of the parts by amount of substance is mol.
Step 3. The second mixed solution is cooled to minus 1°C in the atmosphere of nitrogen, terephthaloyl chloride into is added into the second mixed solution, and stirred at a rotating speed of 600 rpm for 10 min until uniform, thus obtaining a high-molecular weight poly-p-phenylene terephthalamide polymer solution with low apparent viscosity. In parts by amount of substance, a ratio of the p-phenylenediamine to the terephthaloyl chloride is 17.5: 17.

A slurry for a lithium-ion coating separator includes a second solvent, a dispersant, solid ceramic particles, and the high-molecular weight poly-p-phenylene terephthalamide polymer solution with low apparent viscosity. In parts by mass, a ratio of the dispersant to the solid ceramic particles to the high-molecular weight poly-p-phenylene terephthalamide polymer solution with low apparent viscosity is 1: 10: 55. A ratio of the second solvent to the solid ceramic particles is 89: 10. In this embodiment, the dispersant is BYK-LPN21954, the solid ceramic particles are alumina (solid particles) and fumed alumina (powder) in a mass ratio of 5: 5. The particle size of the alumina is 0.05-1 µm, and the particle size of the fumed alumina is 50-150 nm. The second solvent is the same as the first solvent.

A preparation method for a slurry for a lithium battery coating separator includes the following steps:
S1. The dispersant and the second solvent are mixed and stirred at a rotating speed of 500 rpm for 25 min until the dispersant is uniformly dispersed into the second solvent, thus obtaining a solution A.
S2. The alumina is added into the solution A, and then stirred at a rotating speed of 600 rpm for 25 min, and then the fumed alumina is added and then stirred at a rotating speed of 600 rpm for 25 min, all the solid ceramic particles are added and sand-milled at 1700 rpm for 50 min, thus obtaining a solution B.
S3. The solution B and the high-molecular weight poly-p-phenylene terephthalamide polymer solution with low apparent viscosity are mixed and then stirred at a rotating speed of 600 rpm for 30 min to obtain the slurry for a lithium battery coating separator.

A method for preparing a lithium battery separator includes the following steps:
coating the slurry for a lithium battery coating separator on one side of a base film at a speed of 8 m/min by micro-gravure coating, carrying out gradient content extraction of the solvent, drying at 80°C for 60 s to obtain the lithium battery separator, in which the thickness of the coated coating is 3 µm, and the base film is a PE film with a thickness of 9 µm. The gradient content extraction of the solvent includes performing extraction by using a first extractant, a second extractant, a third extractant and a fourth extractant in turn (the immersion time of the separator in one extractant is 9 s). Each of the first extractant, the second extractant and the third extractant is a mixture of an extractive solution and water, and the extractive solution is N-methylpyrrolidone. The concentration of the extractive solution in the first extractant is 90 wt%, the concentration of the extractive solution in the second extractant is 50 wt%, and the concentration of the extractive solution in the third extractant is 30 wt%. The fourth extractant is water.

### Comparative example 2

A preparation method for a poly-p-phenylene terephthalamide polymer solution is essentially consistent with that in Embodiment 2, the only difference is that in this comparative example, the deionized water as a reaction control agent is not added during stirring, the water content in the first solvent is 61.6 ppm, and "cooling the second mixed solution to minus 1.0°C" in Embodiment 2 is replaced with "cooling the second mixed solution to minus 1.2°C".

A preparation method for the slurry for a lithium battery coating separator in this Comparative example is basically the same as that for the slurry for a lithium battery coating separator in Embodiment 2. The only difference is that the high-molecular weight poly-p-phenylene terephthalamide polymer solution with low apparent viscosity in the preparation method for the slurry for the lithium battery coating separator in Embodiment 2 is replaced with "poly-p-phenylene terephthalamide polymer solution" in this Comparative example.

In a method for preparing the lithium battery separator, the slurry for a lithium battery coating separator in this Comparative example is manually coated on the surface of the PE base film with a thickness of 9 µm, and then gradient content extraction of solvent and drying are carried out to obtain the lithium battery separator. The "gradient content extraction of solvent and drying" in this Comparative example are consistent with the "gradient content extraction of solvent and drying" in "a method for preparing a lithium battery separator" in Embodiment 2. (due to high apparent viscosity of the slurry for a lithium battery coating separator prepared from the poly-p-phenylene terephthalamide polymer solution prepared in Comparative example 2, the feeding operation cannot be carried out smoothly, and the slurry can only be coated manually, and the falling out is serious in the process of the gradient content extraction of the solvent ater coating).

### Embodiment 3

A preparation method for a high-molecular weight poly-p-phenylene terephthalamide polymer solution with low apparent viscosity includes the following steps:
Step 1. Solubilizing salt and a first solvent are mixed in an atmosphere of nitrogen, and stirred at a temperature of 80°C a rotating speed of 600 rpm for 80 min until the solubilizing salt is uniformly dispersed in the first solvent to obtain a first mixed solution. In the stirring process, deionized water which serves as the reaction control agent is added. In parts by mass, a ratio of the first solvent to the solubilizing salt is 100: 7.5, the first solvent is a N-methylpyrrolidone solution, the water content in the first solvent is 56.4 ppm, and the solubilizing salt is calcium chloride.
Step 2. The first mixed solution is cooled to 8.6°C in the atmosphere of nitrogen, p-phenylenediamine is added into the first mixed solution, and stirred at a rotating speed of 600 rpm for 40 min until uniform, thus obtaining a second mixed solution. In the stirring process, the deionized water which serves as the reaction control agent is added. A ratio of the parts by mass of the first mixed solution to the parts by amount of substance of the p-phenylenediamine is 100: 18.2, the unit of the parts by mass is kg, and the unit of the parts by amount of substance is mol.
Step 3. The second mixed solution is cooled to minus 2.3°C in the atmosphere of nitrogen, terephthaloyl chloride into is added into the second mixed solution, and stirred at a rotating speed of 600 rpm for 15 min until uniform, thus obtaining a high-molecular weight poly-p-phenylene terephthalamide polymer solution with low apparent viscosity. In the process of cooling the second mixed solution, the deionized water serving as the reaction control agent is added. In parts by amount of substance, a ratio of the p-phenylenediamine to the terephthaloyl chloride is 18.2: 18. In this embodiment, in parts by mass, a ratio of the reaction control agent respectively added in Step 1, Step 2 and Step 3 is 5: 3: 2, thus making the concentration of the reaction control agent in the high-molecular weight poly-p-phenylene terephthalamide polymer solution with low apparent viscosity be 300 rpm.

A slurry for a lithium-ion coating separator includes a second solvent, solid ceramic particles, and the high-molecular weight poly-p-phenylene terephthalamide polymer solution with low apparent viscosity. In parts by mass, a ratio of the second solvent to the solid ceramic particles to the high-molecular weight poly-p-phenylene terephthalamide polymer solution with low apparent viscosity is 3: 1: 4. The ceramic solid particle is barium sulfate (solid particles), and the particle size of the barium sulfate is 0.05-1 µm. The second solvent is the same as the first solvent.

A preparation method for a slurry for a lithium battery coating separator includes the following steps:
S1. The second solvent is prepared to serve as a solution A;
S2. The solid ceramic particles are added into the second solvent, stirred at a rotating speed of 500 rpm for 35 min, and sand-milled at 1700 rpm for 50 min to obtain a solution B.
S3. The solution B and the high-molecular weight poly-p-phenylene terephthalamide polymer solution with low apparent viscosity are mixed, stirred at a rotating speed of 600 rpm for 30 min to obtain the slurry for a lithium battery coating separator.

A method for preparing a lithium battery separator includes the following steps:
coating the slurry for a lithium battery coating separator on one side of a base film at a speed of 8 m/min by micro-gravure coating, carrying out gradient content extraction of the solvent, drying at 80°C for 60 s to obtain the lithium battery separator, in which the thickness of the coated coating is 3 µm, and the base film is a PE film with a thickness of 9 µm. The gradient content extraction of the solvent includes performing extraction by using a first extractant, a second extractant, a third extractant and a fourth extractant in turn (the immersion time of the separator in one extractant is 9 s). Each of the first extractant, the second extractant and the third extractant is a mixture of an extractive solution and water, and the extractive solution is N-methylpyrrolidone. The concentration of the extractive solution in the first extractant is 90 wt%, the concentration of the extractive solution in the second extractant is 50 wt%, and the concentration of the extractive solution in the third extractant is 30 wt%. The fourth extractant is water.

### Comparative example 3

A preparation method for a poly-p-phenylene terephthalamide polymer solution is essentially consistent with that in Embodiment 3, the only difference is that in this comparative example, the deionized water as a reaction control agent is not added during stirring, the water content in the first solvent is 57.6 ppm, and "cooling the second mixed solution to minus 2.3°C" in Embodiment 3 is replaced with "cooling the second mixed solution to minus 2.6°C".

A preparation method for the slurry for a lithium battery coating separator is carried out according to the preparation method for the slurry for a lithium battery coating separator in Embodiment 3. The high-molecular weight poly-p-phenylene terephthalamide polymer solution with low apparent viscosity in the preparation method for the slurry for a lithium battery coating separator in Embodiment 3 is replaced with the "poly-p-phenylene terephthalamide polymer solution" in this Comparative example. In the process of preparing the slurry for a lithium battery coating separator by using the poly-p-phenylene terephthalamide polymer solution prepared in Comparative example 3, the poly-p-phenylene terephthalamide polymer solution continues to polymerize, and the apparent viscosity of the poly-p-phenylene terephthalamide polymer solution continues to increase and gradually solidifies, making the slurrying process unable to operate smoothly. Therefore, the slurry for a lithium battery coating separator prepared in Comparative example 3 is not successfully used to prepare the lithium battery separator for the following tests.

The high-molecular weight poly-p-phenylene terephthalamide polymer solution with low apparent viscosity prepared in Embodiments 1-3 and the poly-p-phenylene terephthalamide polymer solution prepared in Comparative examples 1-3 are tested for apparent viscosity. The high-molecular weight poly-p-phenylene terephthalamide polymer solution with low apparent viscosity/poly-p-phenylene terephthalamide polymer solution is extruded into a film, washed and dried, and then subjected to thermal weight loss and weight-average molecular weight testing. The results are shown in Table 1.

**Table 1**

| Test item | Apparent viscosity (cps) | Weight-average molecular weight | Thermal weight loss (Temperature interval °C), weight loss proportion (%) | |
|---|---|---|---|---|
| Embodiment 1 | 1000 | 7864 | 554-596 (°C), 17.28 (%) | 678-890 (°C), 72.71 (%) |
| Comparative example 1 | 50000 | 8413 | 527-588 (°C), 24.83 (%) | 674-770 (°C), 34.75 (%) |
| Embodiment 2 | 5000 | 9764 | 560-597 (°C), 20.78 (%) | 676-953 (°C), 78.41 (%) |
| Comparative example 2 | >50000 | 10248 | 527-600 (°C), 25.91 (%) | 672-823 (°C), 50.41 (%) |
| Embodiment 3 | 9000 | 13542 | 560-610 (°C), 16.68 (%) | 710-984 (°C), 79.54 (%) |
| Comparative example 3 | > 100000 | 14266 | 529-590 (°C), 26.56 (%) | 660-866 (°C), 64.31 (%) |

From the analysis in Table 1, it can be seen that after adding the reaction control agent in the process of synthesizing poly-p-phenylene terephthalamide, the apparent viscosity of the obtained high-molecular weight poly-p-phenylene terephthalamide polymer solution with low apparent viscosity is remarkably reduced, and the weight-average molecular weight is slightly reduced, but the distribution of the weight average molecular weight is relatively uniform, the percentage of decomposition is increased after reaching 600°C, and the heat resistance is enhanced.

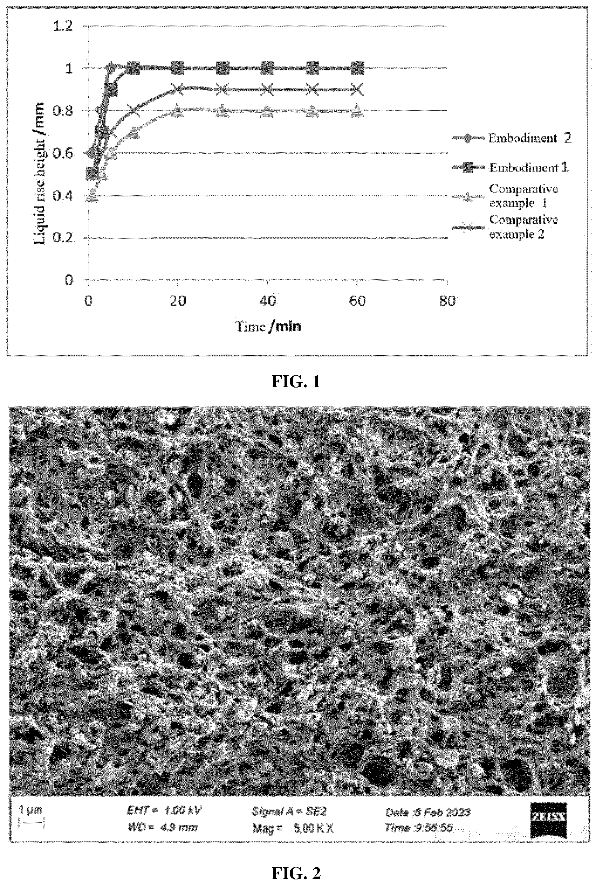

The performance of the lithium battery separators prepared in Embodiments 1-3 and Comparative examples 1-2 are tested, and the results are shown in Table 2, Table 3 and FIG. 1:

**Table 2**

| Test item | Thickness (µm) | Air permeability (sec/100 ml) | 130°C*1h thermal shrinkage (%) transverse direction, machine direction | Tensile strength (kgf/cm²) |
|---|---|---|---|---|
| Embodiment 1 | 15.34 | 207 | 0.21, 0.20 | 1325.4 |
| Comparative example 1 | 14.36 | 191 | 2.32, 2.21 | 945.6 |
| Embodiment 2 | 12.06 | 188 | 0.12, 0.12 | 1548.3 |
| Comparative example 2 | 12.56 | 199 | 0.56, 0.59 | 1468.5 |
| Embodiment 3 | 12.24 | 175 | 0.11, 0.10 | 1698.2 |

**Table 3**

| Test item | Total thickness (µm) | Cohesive force (N/m) | 200°C*1h thermal shrinkage (%) transverse direction, machine direction | Needle puncture strength (N2) |
|---|---|---|---|---|
| Embodiment 1 | 15.34 | 34.6 | 1.31, 1.42 | 7.4 |
| Comparative example 1 | 14.36 | 32.1 | 4.35, 4.41 | 6.8 |
| Embodiment 2 | 12.06 | 36.4 | 1.14, 1.16 | 7.9 |
| Comparative example 2 | 12.56 | 32.5 | 1.13, 1.18 | 7.5 |
| Embodiment 3 | 12.24 | 36.5 | 0.56, 0.62 | 7.9 |

As can be seen from Table 2 and Table 3, the test data in Embodiment is close to that in the corresponding Comparative example, and the performance is even better. Specifically, the thermal stability is maintained and the mechanical tensile strength is enhanced. It can be seen from FIG. 1 that the separator in Embodiment has better electrolyte solution wettability than that in corresponding Comparative example.

The lithium battery separators prepared in Embodiments 1-3 and Comparative example 1 are assembled into lithium-ion batteries. The cathode material is a ternary composite of lithium cobaltate, lithium manganate, and lithium nickelate (purchased from Huijie Lithium Energy), the anode material is graphite, and the electrolyte in the electrolyte solution is LiPF₆. Test results are as shown in the following Table 4:

**Table 4**

| Lithium battery separator | Comparative example 1 | Embodiment 1 | Embodiment 2 | Embodiment 3 |
|---|---|---|---|---|
| Cycle performance of battery at 0.5 C rate (100 cycles) | 84.55% | 93.16% | 93.54% | 94.74% |
| Average coulombic efficiency of battery (20 cycles later) | 99.84% | 99.93% | 99.93% | 99.91% |
| anode at 0.5 C after 100 cycles M (M=Mn, Co, Ni) content | 605 ppm | 35 ppm | 26 ppm | 42 ppm |
| Battery bulge rate of 500 batteries at 0.5 C after 500 cycles | 3.6% | 0% | 0% | 0% |

### Comparative example 4

A preparation method for a poly-p-phenylene terephthalamide separator may refer to that in CN109411676A.

Compared with the patent CN109411676A, a pore-forming agent is not used, which is more conducive to the recovery of the extractant, and the properties of air permeability, thermal shrinkage and needle puncture strength are all improved, thus achieving the purpose of reducing cost and increasing efficiency.

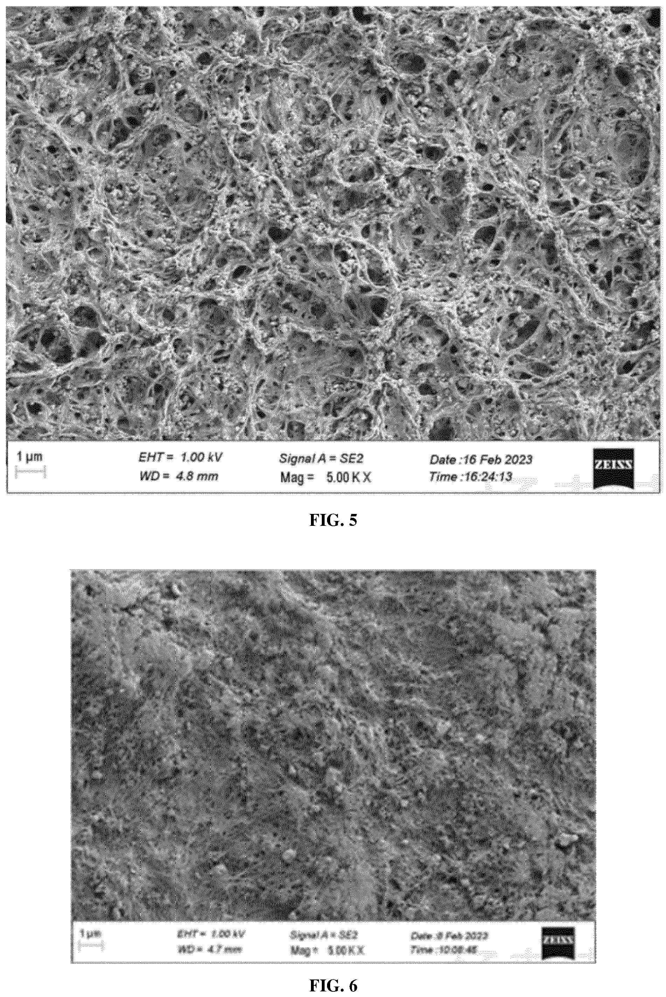

As can be seen from FIG. 2 to FIG. 3 and FIG. 5 to FIG. 6, due to the addition of the reaction control agent, the fibers in the Embodiment are coarse, the distribution of the ceramic particles and fibers is uniform, and the porosity is obviously increased, while the fibers in the Comparative Example are fine and there is an agglomeration phenomenon, and the distribution of the ceramic particles and fibers are nonuniform.

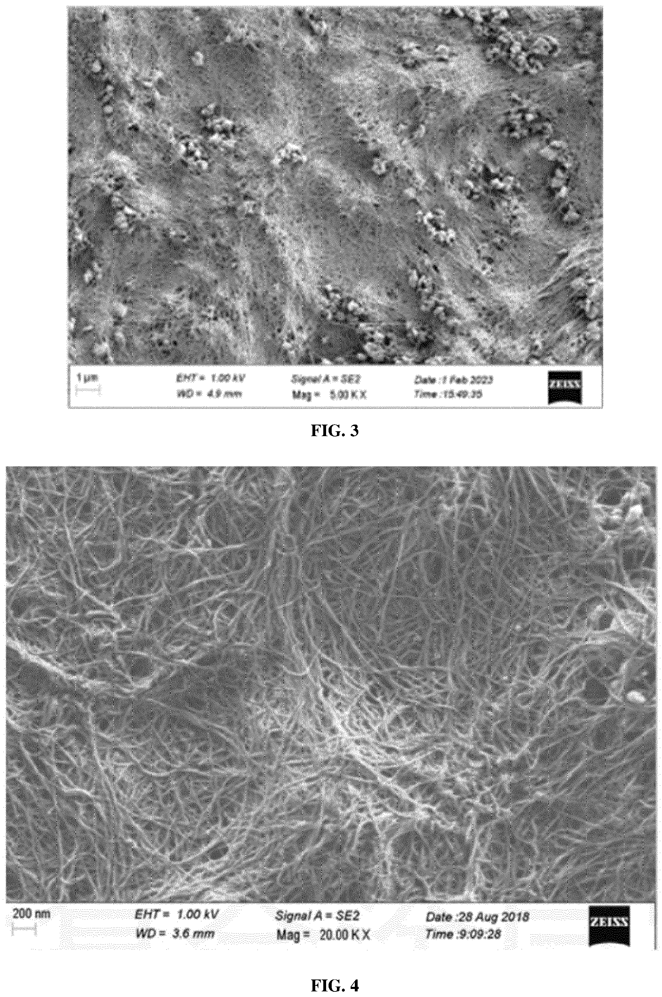

As can be seen from FIG. 4, the fibers of a poly-p-phenylene terephthalamide separator prepared in CN109411676A are obvious and layered together, but ceramic particles are only showed in a small amount on the right side, and the distribution of fibers and ceramic particles is nonuniform. It is speculated that the fibers and ceramics may be layered.

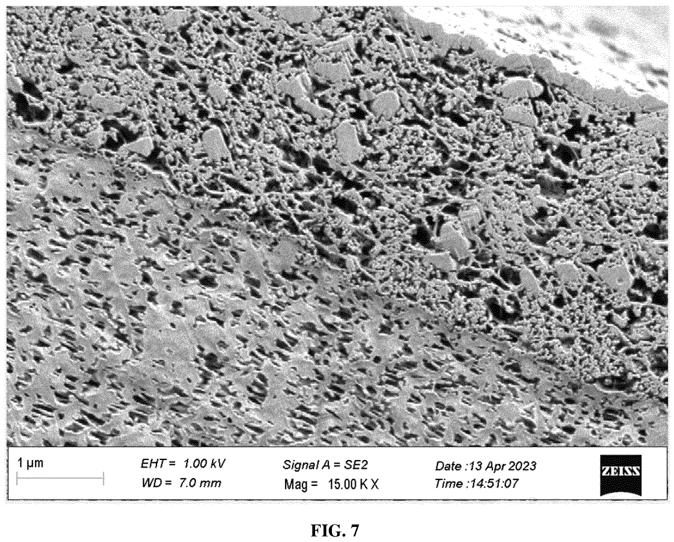

As can be seen from FIG. 7, the fibers and ceramic particles of the poly-p-phenylene terephthalamide separator prepared in Embodiment 1 of the present disclosure are distributed alternately, which is uniform and orderly, such that the coating separator can better combine the performance advantages of fibers and ceramic particles.

Through the above analysis, it can be concluded that the addition of reaction control agent in the process of synthesizing PPTA can effectively reduce the apparent viscosity of a synthesized product while ensuring the molecular weight of the synthesized product. After the PPTA is mixed with the ceramic particles, the slurry for a lithium battery coating separator is coated on the base film, and the thermal stability of the obtained lithium battery separator is maintained, the mechanical tensile strength is enhanced, the porosity is greatly increased, and electrolyte solution wettability is better.

### Embodiment 4 (Comparison)

A preparation method for a poly-p-phenylene terephthalamide polymer solution is essentially consistent with that in Comparative example 1, and the only difference is that in this embodiment, the water content in the first solvent is 20 ppm.

### Embodiment 5

A preparation method for a poly-p-phenylene terephthalamide polymer solution in this embodiment is essentially consistent with that in Embodiment 4, and the only difference is the water content in the first solvent, and in this embodiment, the water content in the first solvent is 103 ppm.

### Embodiment 6

A preparation method for a poly-p-phenylene terephthalamide polymer solution in this embodiment is essentially consistent with that in Embodiment 4, and the only difference is the water content in the first solvent, and in this embodiment, the water content in the first solvent is 162 ppm.

### Embodiment 7

A preparation method for a poly-p-phenylene terephthalamide polymer solution in this embodiment is essentially consistent with that in Embodiment 4, and the only difference is the water content in the first solvent, and in this embodiment, the water content in the first solvent is 240 ppm.

### Embodiment 8

A preparation method for a poly-p-phenylene terephthalamide polymer solution in this embodiment is essentially consistent with that in Embodiment 4, and the only difference is the water content in the first solvent, and in this embodiment, the water content in the first solvent is 350 ppm.

### Embodiment 9

A preparation method for a poly-p-phenylene terephthalamide polymer solution in this embodiment is essentially consistent with that in Embodiment 4, and the only difference is the water content in the first solvent, and in this embodiment, the water content in the first solvent is 420 ppm.

### Embodiment 10

A preparation method for a high-molecular weight poly-p-phenylene terephthalamide polymer solution with low apparent viscosity in this embodiment is essentially the same as that in Embodiment 1, the only difference is the difference of the addition amount of the reaction control agent, the addition amount of the reaction control agent in this embodiment is 50 ppm (the addition amount: the reaction control agent is added to make the reaction control agent in the high-molecular weight poly-p-phenylene terephthalamide polymer solution with low apparent viscosity reach the concentration)

### Embodiment 11

A preparation method for a high-molecular weight poly-p-phenylene terephthalamide polymer solution with low apparent viscosity in this embodiment is essentially the same as that in Embodiment 1, the only difference is the difference of the addition amount of the reaction control agent, the addition amount of the reaction control agent in this embodiment is 100 ppm.

### Embodiment 12

A preparation method for a high-molecular weight poly-p-phenylene terephthalamide polymer solution with low apparent viscosity in this embodiment is essentially the same as that in Embodiment 1, the only difference is the difference of the addition amount of the reaction control agent, the addition amount of the reaction control agent in this embodiment is 150 ppm.

### Embodiment 13

A preparation method for a high-molecular weight poly-p-phenylene terephthalamide polymer solution with low apparent viscosity in this embodiment is essentially the same as that in Embodiment 1, the only difference is the difference of the addition amount of the reaction control agent, the addition amount of the reaction control agent in this embodiment is 200 ppm.

### Embodiment 14

A preparation method for a high-molecular weight poly-p-phenylene terephthalamide polymer solution with low apparent viscosity in this embodiment is essentially the same as that in Embodiment 1, the only difference is the difference of the addition amount of the reaction control agent, the addition amount of the reaction control agent in this embodiment is 250 ppm.

### Embodiment 15

A preparation method for a high-molecular weight poly-p-phenylene terephthalamide polymer solution with low apparent viscosity in this embodiment is essentially the same as that in Embodiment 1, the only difference is the difference of the addition amount of the reaction control agent, the addition amount of the reaction control agent in this embodiment is 300 ppm.

### Embodiment 16

A preparation method for a high-molecular weight poly-p-phenylene terephthalamide polymer solution with low apparent viscosity in this embodiment is essentially the same as that in Embodiment 1, the only difference is the difference of the addition amount of the reaction control agent, the addition amount of the reaction control agent in this embodiment is 350 ppm.

### Embodiment 17

A preparation method for a high-molecular weight poly-p-phenylene terephthalamide polymer solution with low apparent viscosity in this embodiment is essentially the same as that in Embodiment 1, the only difference is the difference of the addition amount of the reaction control agent, the addition amount of the reaction control agent in this embodiment is 400 ppm.

The apparent viscosity of the poly-p-phenylene terephthalamide polymer solution prepared in Embodiments 4-9 and the high-molecular weight poly-p-phenylene terephthalamide polymer solution with low apparent viscosity prepared in Embodiments 10-17 are tested. The poly-p-phenylene terephthalamide polymer solution/high-molecular weight poly-p-phenylene terephthalamide polymer solution with low apparent viscosity is extruded into a film, washed and dried, and then subjected to the thermal weight loss and weight-average molecular weight testing. The results are shown in Table 5:

**Table 5**

| Test item | Apparent viscosity (cps) | Weight-average molecular weight | Thermal weight loss (Temperature interval °C), weight loss proportion (%) | |
|---|---|---|---|---|
| Embodiment 4 | > 100000 | 9504 | 554-596(°C), 26.28 (%) | 678-990(°C), 62.71 (%) |
| Embodiment 5 | >50000 | 9211 | 550-598(°C), 24.83 (%) | 674-970(°C), 64.75 (%) |
| Embodiment 6 | 45000 | 8495 | 560-597(°C), 25.78 (%) | 676-953(°C), 58.41 (%) |
| Embodiment 7 | 10000 | 6700 | 527-600(°C), 32.91 (%) | 672-823(°C), 50.41 (%) |
| Embodiment 8 | 600 | 2364 | 423-510(°C), 34.68 (%) | 568-723(°C), 46.83 (%) |
| Embodiment 9 | 300 | 1017 | 394-500(°C), 36.56 (%) | 556-616(°C), 44.31 (%) |
| Embodiment 10 | 9000 | 9204 | 560-600(°C), 20.21 (%) | 672-956(°C), 68.43 (%) |
| Embodiment 11 | 7000 | 8689 | 560-597(°C), 18.14 (%) | 678-983(°C), 70.26 (%) |
| Embodiment 12 | 5000 | 8435 | 561-583(°C), 18.23 (%) | 674-956(°C), 71.03 (%) |
| Embodiment 13 | 3000 | 8164 | 553-584(°C), 17.86 (%) | 676-943(°C), 72.12 (%) |
| Embodiment 14 | 2000 | 7681 | 521-603(°C), 21.35 (%) | 652-914(°C), 68.45 (%) |
| | | | | |
| Embodiment 15 | 900 | 7084 | 513-564(°C), 23.64 (%) | 654-897(°C), 64.31 (%) |
| Embodiment 16 | 700 | 4710 | 502-554(°C), 24.75 (%) | 615-703(°C), 58.42 (%) |
| Embodiment 17 | 600 | 3628 | 435-521(°C), 26.45 (%) | 564-735(°C), 50.01 (%) |

A preparation method for the slurry for a lithium battery coating separator is the same as the preparation method for the slurry for the lithium battery coating separator in Embodiment 1, the only difference is that the "high-molecular weight poly-p-phenylene terephthalamide polymer solution with low apparent viscosity" in the preparation method for the slurry for a lithium battery coating separator in Embodiment 1 is replaced with "one of the high-molecular weight poly-p-phenylene terephthalamide polymer solution with low apparent viscosity and prepared in Embodiments 10-17 and poly-p-phenylene terephthalamide polymer solution prepared in Embodiments 4-9".

A method for preparing a lithium battery separator is operated according to "a method for preparing a lithium battery separator" in Embodiment 1, where the slurry for a lithium battery coating separator is one of the slurries prepared in Embodiments 6, 7 and 10-16. (Due to high apparent viscosity of the slurry for a lithium battery coating separator by using the poly-p-phenylene terephthalamide polymer solution prepared in Embodiment 4, the slurrying cannot be carried out smoothly. Due to high apparent viscosity of the slurry for a lithium battery coating separator by using the poly-p-phenylene terephthalamide polymer solution prepared in Embodiment 5, the feeding cannot be carried out. Due to high apparent viscosity of the slurry for a lithium battery coating separator by using the poly-p-phenylene terephthalamide polymer solution prepared in Embodiment 6, the feeding is slow. The slurry for a lithium battery coating separator by using the poly-p-phenylene terephthalamide polymer solution prepared in Embodiments 8 to 9 is easy to fall in the coating process. The slurry for a lithium battery coating separator by using the high-molecular weight poly-p-phenylene terephthalamide polymer solution with low apparent viscosity prepared in Embodiment 17 is serious in falling. Therefore, the slurry for the lithium battery coating separator prepared in Embodiments 4-5, Embodiments 8-9 and Embodiment 17 is not used for preparing the lithium battery separator.)

The apparent viscosity of the slurry for a lithium battery coated separator prepared in Embodiments 4-17 is tested (Table 6), and the performance of the lithium battery separators prepared in Embodiments 6, 7 and 10-16 is tested (Table 7). The results are shown in Tables 6 and 7.

**Table 6**

| Test item | Apparent viscosity of slurry (cps) | Note | Thickness (µm) | Air permeability (sec/100 ml) | Cohesive force (N/m) |
|---|---|---|---|---|---|
| Embodime nt 4 | > 10000 | Unable to make slurry | / | / | / |
| Embodime nt 5 | > 10000 | Unable to feed | / | / | / |
| Embodime nt 6 | 7825 | Slow feeding | 15.16 | 205 | 34.64 |
| Embodim ent 7 | 3315 | / | 15.23 | 211 | 33.56 |
| Embodim ent 8 | 364 | Falling | / | / | / |
| Embodim ent 9 | 213 | Falling | / | / | / |
| Embodime nt 10 | 2481 | / | 15.31 | 221 | 35.41 |
| Embodime nt 11 | 1835 | / | 15.26 | 215 | 34.29 |
| Embodime nt 12 | 1204 | / | 15.34 | 224 | 35.21 |
| Embodime nt 13 | 963 | / | 15.41 | 235 | 33.56 |
| Embodime nt 14 | 856 | / | 15.13 | 201 | 32.13 |
| Embodime nt 15 | 763 | / | 15.21 | 213 | 33.51 |
| Embodime nt 16 | 543 | Slight falling | / | / | / |
| Embodime nt 17 | 211 | Serious falling | / | / | / |

**Table 7**

| Test item | 130°C*1h, thermal shrinkage(%) | | 200°C*1h, thermal shrinkage(%) | | Needle puncture strength (N) |
|---|---|---|---|---|---|
| | Transverse direction | Machine direction | Transverse direction | Machine direction | |
| Embodiment 6 | 0.21 | 0.23 | 0.76 | 0.78 | 7.41 |
| Embodiment 7 | 1.4 | 1.3 | 3.5 | 3.7 | 5.6 |
| Embodiment 10 | 0.03 | 0.04 | 0.11 | 0.11 | 7.85 |
| Embodiment 11 | 0.07 | 0.08 | 0.15 | 0.17 | 7.56 |
| Embodiment 12 | 0.12 | 0.11 | 0.21 | 0.23 | 7.21 |
| Embodiment 13 | 0.25 | 0.26 | 0.92 | 0.91 | 6.98 |
| Embodiment 14 | 0.31 | 0.34 | 1.54 | 1.56 | 6.71 |
| Embodiment 15 | 0.57 | 0.65 | 2.31 | 2.42 | 6.54 |
| Embodiment 16 | 3.56 | 3.78 | 6.32 | 6.65 | 5.25 |

According to the embodiments, the suitable synthesis conditions are as follows: the water content of the first solvent is less than or equal to 100 ppm, and the added reaction control agent makes the concentration of the reaction control agent in the high-molecular weight poly-p-phenylene terephthalamide polymer solution with low apparent viscosity less than or equal to 300 ppm. In this case, the synthesized poly-p-phenylene terephthalamide polymer solution has low apparent viscosity and relatively high weight-average molecular weight, which is suitable for preparing a lithium battery coating slurry.

Based on the above data analysis, by adjusting a ratio of the reaction control agent to the water content of the first solvent, the obtained slurry for a lithium battery coating separator can well show the excellent thermal stability and high strength performance of poly-p-phenylene terephthalamide, and the characteristics of the coating are directly related to the molecular weight of the poly-p-phenylene terephthalamide, which can be used to prepare slurry, and the weight-average molecular weight of the poly-p-phenylene terephthalamide with sufficient performance for the lithium battery separator ranges from 5000 to 10000. In the process of synthesizing the poly-p-phenylene terephthalamide polymer solution, the optimum ratio of the reaction control agent to the water content of the first solvent itself is determined, and the high-molecular weight poly-p-phenylene terephthalamide polymer solution with low apparent viscosity is prepared. The slurry for the lithium battery coating separator is prepared from the high-molecular weight poly-p-phenylene terephthalamide polymer solution with low apparent viscosity. The battery separator coated with the slurry had excellent performance, has thermal shrinkage, needle puncture strength and air permeability better than those in the patent CN109411676A.

The present disclosure has been described by way of example above, and it should be noted that without departing from the core of the present disclosure, any simple variation, modification or other equivalent replacements that can be made by those skilled in the art without creative labor falls within the scope of protection of the present disclosure.

## Claims

1. A preparation method for a high-molecular weight poly-p-phenylene terephthalamide polymer solution with low apparent viscosity, comprising the following steps: adding a reaction control agent in the process of synthesizing poly-p-phenylene terephthalamide from p-phenylenediamine and terephthaloyl chloride to obtain a high-molecular weight poly-p-phenylene terephthalamide polymer solution with low apparent viscosity containing the reaction control agent, wherein a concentration of the reaction control agent in the high-molecular weight poly-p-phenylene terephthalamide polymer solution with low apparent viscosity is less than 300 ppm, a concentration of water in a first solvent used for synthesizing the poly-p-phenylene terephthalamide is less than or equal to 100 ppm, and the reaction control agent is a solvent which is miscible with the first solvent and capable of curing the poly-p-phenylene terephthalamide at the same time.

2. The preparation method according to claim 1, wherein the reaction control agent is deionized water, alcohol, ester, or ether.

3. The preparation method according to claim 1 or 2, wherein the preparation method for the high-molecular weight poly-p-phenylene terephthalamide polymer solution with low apparent viscosity comprises the following steps:
Step 1: mixing solubilizing salt and a first solvent in an atmosphere of nitrogen or inert gas, and stirring until the solubilizing salt is uniformly dispersed in the first solvent to obtain a first mixed solution, wherein in parts by mass, a ratio of the first solvent to the solubilizing salt is (100-103): (3-8);
Step 2: cooling the first mixed solution to 5-15°C in the atmosphere of nitrogen or inert gas, adding p-phenylenediamine into the first mixed solution, and stirring uniformly to obtain a second mixed solution, wherein a ratio of the parts by mass of the first mixed solution to the parts by amount of substance of the p-phenylenediamine is 100: (16-20), and the unit of the parts by amount of substance is mol, and the unit of the parts by mass is kg; and
Step 3: cooling the second mixed solution to minus 5-5°C in the atmosphere of nitrogen or inert gas, adding terephthaloyl chloride into the second mixed solution, and stirring uniformly to obtain a high-molecular weight poly-p-phenylene terephthalamide polymer solution with low apparent viscosity, wherein in parts by mass, a ratio of the p-phenylenediamine to the terephthaloyl chloride is (1-1.05): 1;
wherein in Step 1 to Step 3, the reaction control agent is added at one time or multiple times in any of the Step 1 to Step 3, making a concentration of the reaction control agent in the high-molecular weight poly-p-phenylene terephthalamide polymer solution with low apparent viscosity less than or equal to 300 ppm.

4. The preparation method according to any one of claims 1 to 3, wherein in Step 1, the first solvent is a nonaqueous solvent, or an aqueous solvent; the nonaqueous solvent is one, or a mixture of multiple of N-methylpyrrolidone, hexamethylphosphoramide, dimethylacetamide, and tetramethylurea, and the aqueous solvent is a mixture of the aqueous solvent and water; and
in Step 1, the stirring is carried out at a temperature of 50-90°C, and the solubilizing salt is calcium chloride, and/or lithium chloride.

5. A slurry for a lithium-ion coating separator, comprising a second solvent, solid ceramic particles, and the high-molecular weight poly-p-phenylene terephthalamide polymer solution with low apparent viscosity acquired by the preparation method according to any one of claims 1 to 4, wherein in parts by mass, a ratio of the solid ceramic particles to the high-molecular weight poly-p-phenylene terephthalamide polymer solution with low apparent viscosity is (5-30): (50-80); the solid ceramic particles are one, or a mixture of multiple of alumina, fumed alumina, silica, zirconia, aluminum hydroxide, magnesium hydroxide, barium sulfate, boehmite, boron nitride, silicon nitride, and silicon carbide.

6. The slurry for a lithium-ion coating separator according to claim 5, further comprising a dispersant, wherein in parts by mass, a ratio of the dispersant to the solid ceramic particles is (0.01-5): (5-30); the dispersant is one, or a mixture of multiple of a polymer block copolymer dispersant, sodium polyacrylate, potassium polyacrylate, ammonium polyacrylate, and sodium polycarboxylate, and the second solvent is the nonaqueous solvent, or the aqueous solvent, and preferably, the second solvent is the same as the first solvent.

7. The slurry for a lithium-ion coating separator according to claim 6, wherein in parts by weight, a ratio of the second solvent to the solid ceramic particles is (60-90): (5-30).

8. A lithium battery separator, comprising a base film, and a coating covered on one or double sides of the base film, wherein the coating is prepared from the slurry for a lithium-ion coating separator according to any one of claims 5 to 7.

9. A preparation method for the lithium battery separator according to claim 8, comprising the following steps: coating the slurry for a lithium battery coating separator on one side or two sides of the base film, performing gradient content extraction of the solvent, and drying to obtain a lithium battery separator.

10. Application of the lithium battery separator acquired by the preparation method according to claim 8 in a lithium battery.
